# EUROPEAN PATENT SPECIFICATION

(11) **EP 3 614 371 B1**
(45) Date of publication and mention of the grant of the patent: **19.01.2022**
(21) Application number: 17777609.3
(22) Date of filing: 31.05.2017
(51) Int. Cl.: G10H 1/34, G10H 1/00, G10H 1/055

(54) **MODULAR PIANO KEYBOARD**
MODULARE KLAVIERTASTATUR
CLAVIER MODULAIRE DE PIANO

(30) Priority: 20.04.2017 ES 201700374 U
(43) Date of publication of application: 26.02.2020
(73) Proprietor: Pocketpiano, S.L., 08302 Mataró (Barcelona) (ES)
(72) Inventor: BERGADA BOMBI, Josep, 08302 Mataró (Barcelona) (ES); SANZ ARAPILES, Jesús Pedro, 08302 Mataró (Barcelona) (ES)
(74) Representative: Mohammadian, Dario
(86) International application number: PCT/ES2017/070383
(87) International publication number: WO 2018/193140

(56) References cited:
- WO-A1-2017/053928
- CN-A- 109 637 511
- CN-U- 208 848 609
- GB-A- 2 515 286
- JP-A- 2003 302 975
- US-A- 4 936 185
- US-A1- 2004 083 877
- US-A1- 2006 278 058
- US-A1- 2009 188 378
- US-A1- 2009 301 289
- US-A1- 2015 262 565

## Description

### OBJECT OF THE INVENTION AND TECHNICAL FIELD TO WHICH IT BELONGS

The present invention, while capable of optionally incorporating an electronic musical note generator, is not a piano as such since its function is known in the musical world as a "master keyboard" since it requires another external device to generate the complex tones and surrounding sounds of classical pianos or other musical instruments. The essential difference of the present invention with respect to existing master keyboards is its capability of being disassembled in modules of a predetermined number of keys or octaves with the objective of being comfortably carried in a jacket pocket or in a small handbag.

### STATE OF THE ART

The most similar devices that have been found with respect to their portability are the ones based on patent US20050034591, describing electronic pianos, known as "Roll-up piano", as they are made of flexible materials such as silicone in order to be rolled up. The thickness of said flexible materials, in addition to the thickness of small air chambers or other inert gas each containing a pair of sheets or conductive bands therein to act as contact points when pressed, or rather a piezoelectric element, which produce the signals indicative of having been pressed, cause that the thickness resulting from a piano thus rolled up, for example of a conventional 7 octave piano (almost 1.2 meters in length), generates a cylinder of a diameter impossible of carrying in the pocket of a jacket and not even in a typical hand-bag for the exception that of a hand bag of large dimensions.

On the other hand, patent US6259006-B1 'Portable foldable electronic piano' is only similar to the previous invention in that, as its name indicates, instead of being made from flexible materials in order to be rolled up, the groups of keys proposed by the patent are realized with rigid, or semi-rigid, materials in order to be folded in zigzag, contrary to the present invention which modules are loose and capable of assembly.

Publication US-A-2015/262565 refers to a modular keyboard providing several serially connected modules, wherein the user has to manually select the octave level order of each one of the plurality of octave segments, and based on this mechanical connection, a tone is generated corresponding to that key as identified by the mechanical connection.

Publication US-A-2004/083877 refers to a collapsible musical keyboard wherein up to four modules are hinged together and can be stacked onto eachother in a collapsed state. Each module includes internal wiring as well as connective wiring that connects the sets of keys together.

Publication US-A-2009/301289 refers to the problem of conventional MIDI controllers wherein it is difficult or impossible to find a product that is suitable for several different types of applications (live show, pitch, intensity, piano, drum, sliders, knobs, faders, and so on), and proposes a modular MIDI controller comprising a variety of different control modules to be hosted within a connecting chassis, allowing a user to select modules (keyboard 14A, 14A', drum pads 14B, pitch bend wheels 14C, sliders 14D, QWERTY keyboard 14F, track ball 14G). Only a single module (14A, or 14A') is a keyboard, and it is a full sized keyboard with eighty-eight keys 14A or twenty-five keys 14A'.

Publication US-A-4 936 185 refers to a keyboard comprising a plurality of electric circuit modules 130A, 130B, 130C, each module comprising keys and a multiplicity of input and output means and connectors for physically separating the information communicated between the modules. Operation information on each of the keys can be transferred either as parallel signals of 12 bits or in a time division mode.

### ADVANTAGES OF THE PRESENT INVENTION

The device of the present invention not only has the advantage of enabling the easy formation of keyboards with a preferred number of modules or octaves, but also, based on the current technology, in one of the embodiments thereof with a capacitive keyboard capable of detecting the intensity and speed with which the keys are pressed, the disassembled and stacked modules of the conventional 7 octave piano keyboard can even fit into the inside pocket of a man's jacket due to its slightly less than 3 cm thickness and slightly more than 16 cm in length.

Accordingly, the present invention is defined by appended claim 1.

### BRIEF DESCRIPTION OF THE FIGURES OF THE EXEMPLARY EMBODIMENT

**Figure 1** shows the exemplary embodiment of the thinnest version of the modular piano keyboard of the present invention, wherein, apart from the main module (mZ), it has only 3 modules of capacitive octave keys assembled to it, plus a fourth one that is not assembled.
**Figure 2** shows the electrical block diagram of that same example embodiment.
**Figure 3** shows two disassembled modules and the details of each key's sensor system.

### PREFERRED EMBODIMENT AND THE ESSENTIAL OPERATION THEREOF

What hereinafter is called the main module (mZ) (Z for zero octave, corresponding to the octave with the lowest tones) is the module in which the microprocessor (uP) repeatedly orders the other secondary modules (m1 and above) to inform on the status of its twelve keys, so that it can use this information to combine all the data and transmit it by means of a small transceiver circuit of a Bluetooth-type or similar (Tx).

Moreover, in order to keep the number of contact points between modules as small as possible (two for power supply and only one for serial data) and so that said secondary modules do not require having identification recorded thereon to be able to assemble one or more thereof in any order, each of these secondary modules incorporates a microcontroller (µC) which, as detailed below, in addition to continuously measuring the pressure exerted on each of its twelve keys, connects, through one of its inputs pins (e), to one of the left contact points (c) thereof, through which it receives an impulse which represents the command for starting to emit from the output (d) of the previous module, be it the main module or one of the secondary modules. Subsequently, that module (for example, m1) uses its input (e) as an output to provide the status of its keys, and once said operation through the output (d) ends, it gives the same start command signal to the module connected to one of its contact pads (p) on its right side and immediately converts the output (d) into the receiving input for the data provided by the following secondary module (in this case m2); data which it, the m1 module, merely repeats on bypass mode to its input (e).

This operation of supplying data related to the status of its keys and of data transfer to the secondary module, to the previous module, or directly to the main module, which is the case of m1, is repeated in all the modules, because each of them retains their bypass status after having delivered their data to the previous module. Only when a period of time elapses exceeding for example, 0.5 ms, without receiving a bit to be transferred through its output (d) (in this case input), which indicates that there are no more modules being assembled, each secondary module re-converts its pin (e) to the input function, waiting for another command to start the same process.

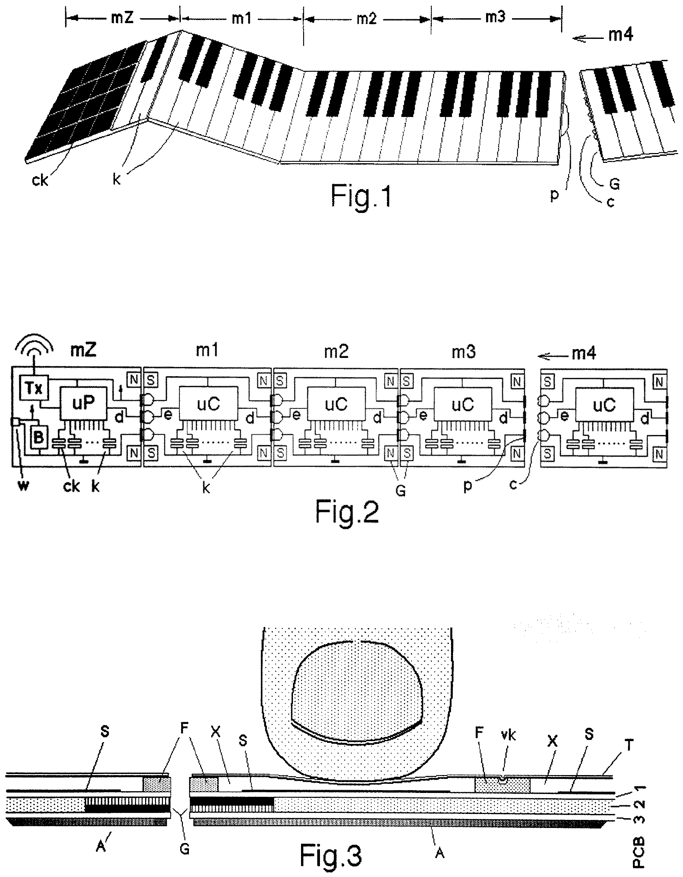

Although the modules may have an electrical interconnection system and a purely mechanic assembly, in the present example embodiment, both said assembly and the connection between its flexible input contact points (c) and the contact pads (p) of the previous module, (not shown in Figure 3 as they are shown in another cross-section of the drawing), is carried out by means of magnets (G) fastened on housings which, for this purpose, are found between layers 1 and 3 of the multilayer printed circuit board (PCB) on the left side edge of each secondary module, and which are those that enable the magnetic connection with the magnets (G) or magnetic pieces on the right side of any other module to which assembly is desired, including mZ.

Also figure 3 shows the two-plate capacitive key system chosen for the example embodiment. The, also multilayer, flexible sheet (T), besides being the one whose upper face graphically shows the keys and which has the separation between keys engraved in bas-relief (vk), the lower face of the flexible sheet has a metallic film which, by being spot welded or welded along lines on the divisions of a die-cut template of copper or another conductive material (F), generates a chamber (X) which, together with the conductive track (S) of the upper face of the PCB, form a capacitor, the capacity of which varies as a function of the variation in the spacing between both conductive surfaces due to the pressure exerted on said sheet (T). Such variation in capacity with respect to the conductive film of the T sheet of each of the different conductive tracks of the PCB, (12 of the keys (k) in the case of the secondary modules and a few more in the mZ module since it includes a control keyboard ck), are read by the microprocessor µP and, together with said data from the secondary modules, form the data package that it delivers to the aforementioned Bluetooth transceiver (Tx).

The small lithium battery (B), which is rechargeable by means of a conventional mini-charger through the socket (W), provides power to both the mZ module containing it and also, through said two contacts, to all the modules that are assembled to it.

Although not shown in the figures because they are only options that do not vary the essence of the invention, for the assembly to operate autonomously, the main module may include a musical generator which directly receives the commands from the microprocessor specifying which notes to generate and the audio signal of which is supplied to the exterior by a headphone jack or by the Bluetooth transceiver (Tx) itself. Also, in order to provide the assembly with better performance or versatility, said control keyboard (ck) can be replaced by a touchscreen allowing for improved man-machine communication. Finally, the modules have an anti-slip material (A) fixed to the underside thereof for the purpose of preventing movement during powerful performances.

## Claims

1. A modular piano keyboard, comprising a main module (mZ) and an indeterminate number of secondary modules (m1, and successive), each one of them with a plurality of piano keys or sensors in the form of a piano key (k); which are assembled magnetically by means of magnets (G); and wherein, on the ends used for assembly, each module has side contact points (c, p), so that when two modules are joined, the contact points of each module close a circuit with those of the other module in order to allow the information regarding which keys are being pressed in any of the assembled modules to reach the main module, wherein the microprocessor (µP) of the main module repeatedly orders the other secondary modules to inform on the status of its twelve keys and processes said information from all the secondary modules for collection and immediate transmission to another external device, wherein each of the secondary modules incorporates a microcontroller (µC) configured to, in addition to continuously measuring the pressure exerted on each of its twelve keys, in response to receiving a start command signal from a previous module, in an input mode, provide the status of the keys to the previous module, and give the start command signal to the following secondary module for receiving its data, and convert to a bypass mode for repeating the data of the following secondary module, wherein this supplying of data related to the status of keys, via intermediate secondary modules to the main module, is repeated in all the modules, until a period of time elapses without receiving data, which indicates that there are no more modules assembled, each secondary module returning to the input mode from the bypass mode.

2. The modular piano keyboard according to claim 1, **characterized in that** the information from all the secondary modules is transmitted by means of a cable connector or through a radio frequency link (Tx).

3. The modular piano keyboard according to claim 2, **characterized in that** each secondary module has a microcontroller (µC) which, in addition to measuring the intensity with which each of its keys is pressed, sends that information in a multiplexed way through one or more of its side contact points (c, p) when said delivery is requested by any of them.

4. The modular piano keyboard according to claims 2 and 3, **characterized in that** each module has a flexible sheet (T) on its upper face, the flexible sheet (T) comprising two or more layers - the lower of which is electrically conductive, fastened and spot welded or welded along PCB lines or along a template of copper or any other electrically conductive material (F) forming short low-height inter-key partitions, and wherein this template is in turn welded along the lines or pad of the upper face of said printed circuit PCB in order to communicate a determined electrical potential to said flexible sheet so that it forms one of the plates of the electrical capacitors that are created with respect to conductive tracks or pads (S), which the printed circuit has in the form of keys, on that same upper face, wherein the electrical capacitors so formed on the surface of each module are those supervised by the microcontroller (µC) of each module by measuring the capacity thereof, to simultaneously pass on said information to the main module each time it is requested.

5. The modular piano keyboard according to claim 2, **characterized in that** the main module has a small electrical accumulator which, once recharged by means of an electrical connector or by any other method, provides autonomous power to both the microprocessor of this main module and to the secondary modules assembled and electrically connected thereto.

6. The modular piano keyboard according to claim 2, **characterized in that** the main module comprises one or more musical note generators, for generating notes that are supplied to the exterior, in amplified or pre-amplified manner, through an audio connector and/or through said radio frequency link (Tx) of claim 2, or another independent radio frequency link to the effect.

7. The modular piano keyboard according to claims 2 and 6, **characterized in that** the main module may comprise a touchscreen by means of which not only the microprocessor (µP) of this main module receives commands from the user on how it must operate, and/or commands to be sent to said external device, but it is also able to show the user the data on the settings that the user has requested or even those from said external device through the radio frequency link (Tx).

8. The modular piano keyboard according to claim 2, **characterized in that** all the modules have a sheet of anti-slip spongy material (A) fixed to the underside thereof for the purpose of hindering movement due to powerful keystrokes.

## Patentansprüche

1. Modulare Klaviertastatur; umfassend ein Hauptmodul (mZ) und eine unbestimmte Anzahl von Sekundärmodulen (m1 und nachfolgende), jedes davon mit einer Vielzahl von Klaviertasten oder Sensoren in Form einer Klaviertaste (k); die magnetisch mit Magneten (G) zusammengebaut sind; und wobei jedes Modul an den zum Zusammenbau verwendeten Enden seitliche Kontaktpunkte (c, p) aufweist, so dass beim Verbinden zweier Module die Kontaktpunkte jedes Moduls eine Schaltung mit denen des anderen Moduls schließen, so dass zugelassen wird, dass Informationen darüber, welche Tasten in einem der zusammengebauten Module gedrückt werden, das Hauptmodul erreichen, wobei der Mikroprozessor (µP) des Hauptmoduls wiederholt die anderen Sekundärmodule anweist, über den Status ihrer zwölf Tasten zu informieren, und die Informationen von allen Sekundärmodulen zum Sammeln und sofortigen Übertragen an eine andere externe Vorrichtung verarbeitet, wobei jedes der Sekundärmodule einen Mikrocontroller (µC) enthält, der konfiguriert ist, um zusätzlich zum kontinuierlichen Messen des auf jede ihrer zwölf Tasten ausgeübten Drucks als Reaktion auf den Empfang eines Startbefehlsignals von einem vorherigen Modul in einem Eingangsmodus den Status der Tasten an das vorherige Modul bereitzustellen und das Startbefehlsignal an das folgende Sekundärmodul zum Empfangen seiner Daten zu geben und in einen Umgehungsmodus zum Wiederholen der Daten des folgenden Sekundärmoduls umzustellen, wobei dieses Bereitstellen von Daten bezüglich des Status von Tasten über zwischengeschaltete Sekundärmodule an das Hauptmodul in allen Modulen wiederholt wird, bis ein Zeitraum verstreicht, ohne Daten zu empfangen, was anzeigt, dass keine Module mehr zusammengebaut sind, wobei jedes Sekundärmodul aus dem Umgehungsmodus in den Eingangsmodus zurückkehrt.

2. Modulare Klaviertastatur nach Anspruch 1, **dadurch gekennzeichnet, dass** die Informationen von allen Sekundärmodulen mittels eines Kabelverbinders oder über eine Funkfrequenzverbindung (Tx) übertragen werden.

3. Modulare Klaviertastatur nach Anspruch 2, **dadurch gekennzeichnet, dass** jedes Sekundärmodul einen Mikrocontroller (µC) aufweist, der zusätzlich zum Messen der Intensität, mit der jede ihrer Tasten gedrückt wird, diese Informationen in gemultiplexter Weise durch einen oder mehrere von seinen seitlichen Kontaktpunkten (c, p) sendet, wenn die Lieferung von einem von ihnen angefordert wird.

4. Modulare Klaviertastatur nach den Ansprüchen 2 und 3, **dadurch gekennzeichnet, dass** jedes Modul auf seiner Oberseite eine flexible Folie (T) aufweist, wobei die flexible Folie (T) zwei oder mehr Schichten umfasst, von denen die untere elektrisch leitfähig ist, die befestigt und punktgeschweißt oder entlang von Leiterplattenleitern oder entlang einer Schablone aus Kupfer oder einem anderen elektrisch leitfähigen Material (F) geschweißt sind und kurze Trennungen mit geringer Höhe zwischen den Tasten bilden, und wobei diese Schablone wiederum entlang der Leiter oder der Kontaktfläche der Oberseite der gedruckten Leiterplatte geschweißt wird, um ein bestimmtes elektrisches Potential an die flexible Folie zu übertragen, so dass sie eine der Platten der elektrischen Kondensatoren bildet, die in Bezug auf Leiterbahnen oder Kontaktflächen (S) erzeugt werden, die die gedruckte Schaltung in der Form von Tasten auf derselben Oberseite aufweist, wobei die derart auf der Oberfläche jedes Moduls gebildeten elektrischen Kondensatoren diejenigen sind, die vom Mikrocontroller (µC) jedes Moduls durch Messen deren Kapazität überwacht werden, um diese Informationen gleichzeitig an das Hauptmodul weiterzuleiten, wenn sie angefordert werden.

5. Modulare Klaviertastatur nach Anspruch 2, **dadurch gekennzeichnet, dass** das Hauptmodul einen kleinen elektrischen Akkumulator aufweist, der, sobald er mittels eines elektrischen Verbinders oder durch ein anderes Verfahren aufgeladen wurde, sowohl an den Mikroprozessor dieses Hauptmoduls als auch an die Sekundärmodule, die zusammengebaut und elektrisch damit verbunden sind, autonome Energie bereitstellt.

6. Modulare Klaviertastatur nach Anspruch 2, **dadurch gekennzeichnet, dass** das Hauptmodul einen oder mehrere Musiknotengeneratoren zum Erzeugen von Noten umfasst, die in verstärkter oder vorverstärkter Weise über einen Audioanschluss und/oder über die Funkfrequenzverbindung (Tx) nach Anspruch 2 oder eine andere unabhängige Funkfrequenzverbindung zu diesem Zweck nach außen bereitgestellt werden.

7. Modulare Klaviertastatur nach den Ansprüchen 2 und 6, **dadurch gekennzeichnet, dass** das Hauptmodul einen Berührungsbildschirm umfassen kann, mittels dessen der Mikroprozessor (µP) dieses Hauptmoduls nicht nur Befehle vom Benutzer zu dessen Bedienung und/oder Befehle empfängt, die an die externe Vorrichtung zu senden sind, sondern auch in der Lage ist, dem Benutzer die Daten der von dem Benutzer angeforderten Einstellungen oder sogar diejenigen von der externen Vorrichtung über die Funkfrequenzverbindung (Tx) anzuzeigen.

8. Modulare Klaviertastatur nach Anspruch 2, **dadurch gekennzeichnet, dass** alle Module eine an ihrer Unterseite befestigte Folie aus rutschfestem, schwammartigen Material (A) aufweisen, um eine Bewegung durch kräftige Tastenanschläge zu verhindern.

## Revendications

1. Clavier de piano modulaire, comprenant un module principal (mZ) et un nombre indéterminé de modules secondaires (m1 et successifs), chacun d'eux avec une pluralité de touches de piano ou de capteurs sous la forme d'une touche de piano (k) ; qui sont assemblés magnétiquement au moyen d'aimants (G) ; et dans lequel, sur les extrémités utilisées pour l'assemblage, chaque module présente des points de contact latéraux (c, p), de sorte que lorsque deux modules sont joints, les points de contact de chaque module ferment un circuit avec ceux de l'autre module afin de permettre aux informations concernant les touches qui sont enfoncées dans l'un quelconque des modules assemblés d'atteindre le module principal, dans lequel le microprocesseur (µP) du module principal ordonne à plusieurs reprises aux autres modules secondaires d'informer de l'état de ses douze touches et traite lesdites informations de tous les modules secondaires pour la collecte et la transmission immédiate à un autre dispositif externe, dans lequel chacun des modules secondaires incorpore un microcontrôleur (µC) configuré pour, en plus de mesurer en continu la pression exercée sur chacune de ses douze touches, en réponse à la réception d'un signal d'instruction de démarrage d'un module précédent, dans un mode d'entrée, fournir l'état des touches au module précédent et donner le signal d'instruction de démarrage au module secondaire suivant pour recevoir ses données et passer en mode de dérivation pour répéter les données du module secondaire suivant, dans lequel cette fourniture de données liées à l'état des touches, par le biais de modules secondaires intermédiaires au module principal, est répétée dans tous les modules, jusqu'à ce qu'un laps de temps s'écoule sans recevoir de données, ce qui indique qu'il n'y a plus de modules assemblés, chaque module secondaire revenant au mode d'entrée à partir du mode de dérivation.

2. Clavier de piano modulaire selon la revendication 1, **caractérisé en ce que** les informations de tous les modules secondaires sont transmises au moyen d'un connecteur de câble ou par l'intermédiaire d'une liaison radiofréquence (Tx).

3. Clavier de piano modulaire selon la revendication 2, **caractérisé en ce que** chaque module secondaire comporte un microcontrôleur (µC) qui, en plus de mesurer l'intensité avec laquelle chacune de ses touches est enfoncée, envoie ces informations de manière multiplexée à travers un ou plusieurs de ses points de contact latéraux (c, p) lorsque ladite livraison est demandée par l'un quelconque d'entre eux.

4. Clavier de piano modulaire selon les revendications 2 et 3, **caractérisé en ce que** chaque module comporte une feuille souple (T) sur sa face supérieure, la feuille souple (T) comprenant deux ou plusieurs couches - dont la couche inférieure est électriquement conductrice, fixées et soudées par points ou soudées le long de lignes PCB ou le long d'un gabarit en cuivre ou tout autre matériau électroconducteur (F) formant de courtes cloisons inter-touches de faible hauteur et dans lequel ce gabarit est à son tour soudé le long des lignes ou plage de la face supérieure de ladite PCB de circuit imprimé afin de communiquer un potentiel électrique déterminé à ladite feuille souple pour qu'elle forme l'une des plaques des condensateurs électriques qui sont créés par rapport à des pistes ou plages conductrices (S), que le circuit imprimé a sous la forme de touches, sur cette même face supérieure, dans lequel les condensateurs électriques ainsi formés à la surface de chaque module sont ceux supervisés par le microcontrôleur (µC) de chaque module en mesurant leur capacité, afin de transmettre lesdites informations au module principal à chaque demande.

5. Clavier de piano modulaire selon la revendication 2, **caractérisé en ce que** le module principal comporte un petit accumulateur électrique qui, une fois rechargé au moyen d'un connecteur électrique ou par tout autre procédé, fournit une alimentation autonome à la fois au microprocesseur de ce module principal et aux modules secondaires assemblés et reliés électriquement à celui-ci.

6. Clavier de piano modulaire selon la revendication 2, **caractérisé en ce que** le module principal comprend un ou plusieurs générateurs de notes de musique, pour générer des notes qui sont fournies à l'extérieur, de manière amplifiée ou pré-amplifiée, par un connecteur audio et/ou par ladite liaison radiofréquence (Tx) selon la revendication 2 ou une autre liaison radiofréquence indépendante à cet effet.

7. Clavier de piano modulaire selon les revendications 2 et 6, **caractérisé en ce que** le module principal peut comporter un écran tactile au moyen duquel non seulement le microprocesseur (µP) de ce module principal reçoit des instructions de l'utilisateur sur son fonctionnement et/ou des instructions à envoyer audit dispositif externe, mais il est également apte à montrer à l'utilisateur les données sur les réglages que l'utilisateur a demandés ou encore ceux dudit dispositif externe par le biais de la liaison radiofréquence (Tx).

8. Clavier de piano modulaire selon la revendication 2, **caractérisé en ce que** tous les modules ont une feuille de matériau spongieux antidérapant (A) fixée sur leur face inférieure dans le but d'entraver les mouvements dus à des frappes puissantes sur les touches.
